# EUROPEAN PATENT APPLICATION

(11) **EP 4 772 865 A1**
(43) Date of publication of application: **08.07.2026**
(21) Application number: 24860004.1
(22) Date of filing: 30.08.2024
(51) Int. Cl.: G01N 23/223, G21K 5/00

(54) **FLUORESCENT X-RAY ANALYSIS APPARATUS**

(30) Priority: 01.09.2023 JP 2023142432
(71) Applicant: Rigaku Corporation, Akishima-shi Tokyo 196-8666 (JP)
(72) Inventor: TANAKA, Yoshiaki, Takatsuki-shi, Osaka 569-1146 (JP); AOYAGI, Koichi, Takatsuki-shi, Osaka 569-1146 (JP)
(74) Representative: Lambacher, Michael
(86) International application number: PCT/JP2024/031411
(87) International publication number: WO 2025/047979

(57) **Abstract**

Measurement can be performed even when spaces divided by a partition film have a pressure difference therebetween, and the partition film is easily extended without causing warping and wrinkles. Provided is an X-ray fluorescence spectrometer, which includes: an irradiation chamber, an inside of which is vacuum; and a sample chamber, an inside of which has an atmospheric pressure, the X-ray fluorescence spectrometer including: a window frame holding member, which forms a part of a partition wall between the irradiation chamber and the sample chamber, and includes an opening for allowing the X-rays to pass therethrough; and a window frame member, which is configured to hold a partition film, and is to be arranged in the opening of the window frame holding member, the partition film being formed from a material that transmits the X-rays, and being a part of the partition wall. The window frame member includes: an inner film holding member having an annular shape, the inner film holding member including a peripheral wall extending from a proximal end to be arranged on the sample chamber side toward a distal end to be arranged on the irradiation chamber side, the distal end having an opening to be closed by a part of the partition film; and an outer film holding member having an annular shape, the outer film holding member being configured to be inserted from the distal end of the inner film holding member to be mounted to the proximal end of the inner film holding member so as to fix a surrounding of the part of the partition film to the inner film holding member.

## Description

### Technical Field

The present invention relates to an X-ray fluorescence spectrometer.

### Background Art

As an apparatus for analyzing an element contained in a sample, an X-ray fluorescence spectrometer has been known (see Patent Literature 1). The X-ray fluorescence spectrometer irradiates a sample with primary X-rays, and performs analysis based on an intensity and energy of fluorescent X-rays exiting the sample. There has also been known a simple X-ray fluorescence spectrometer having a structure in which a sample chamber and an irradiation chamber are separated from each other by a partition membrane so that the sample can be easily replaced (see Patent Literature 2). Further, there has also been known an X-ray fluorescence spectrometer including a sample cell base including an X-ray transmissive sheet which is sandwiched between a base outer frame and a base inner frame, and which closes one end side of the base inner frame (see Patent Literature 3).

### Citation List

### Patent Literature

[PTL 1] WO 2005-024407 A1
[PTL 2] WO 2004-088296 A1
[PTL 3] JP 9-127028 A

### Summary of Invention

### Technical Problem

In the X-ray fluorescence spectrometer of Patent Literature 1, a sample chamber in which a sample is to be accommodated, an irradiation chamber in which an X-ray source is to be accommodated and which is in communication with the sample chamber, an irradiation chamber in which detection means is to be accommodated, and a partition wall, are provided. The X-ray source irradiates the sample with primary X-rays. The detection means disperses and detects secondary X-rays generated from the sample. The partition wall is arranged to divide the irradiation chamber and the irradiation chamber, and allows the X-rays to pass therethrough. A partition membrane is formed from polyimide or the like, and is deteriorated through irradiation of X-rays. Accordingly, it is required to replace the partition membrane at regular periods, but, in the X-ray fluorescence spectrometer of Patent Literature 1, the partition membrane cannot be easily replaced due to the structure of the apparatus.

In the X-ray fluorescence spectrometer of Patent Literature 2, a first frame member and a second frame member sandwiching the partition membrane are arranged between the sample chamber and the irradiation chamber so that the sample chamber and the irradiation chamber are divided. The partition membrane can be easily replaced by forming the first frame member from a permanent magnet and forming the second frame member from a material that is attracted to the permanent magnet. However, the partition membrane is only sandwiched by a magnet and is not fixed. Accordingly, measurement cannot be performed in an environment in which the sample chamber and the irradiation chamber have a pressure difference therebetween. Further, there is a possibility that warping and wrinkles will be caused in the partition membrane when the partition membrane is sandwiched between the first frame member and the second frame member.

The X-ray fluorescence spectrometer of Patent Literature 3 does not assume a case in which the X-ray tube is arranged in a vacuum environment and a sample is arranged in an atmospheric pressure environment. Thus, measurement cannot be performed in an environment in which a region in which the sample is to be arranged and a region in which the X-ray tube is arranged have a pressure difference therebetween.

The present disclosure has been made in view of the above-mentioned problems, and has an object to provide an X-ray fluorescence spectrometer in which measurement can be performed even when spaces divided by a partition film have a pressure difference therebetween, and the partition film can be easily extended without causing warping and wrinkles.

### Solution to Problem

(1) According to one aspect of the present disclosure, there is provided an X-ray fluorescence spectrometer, which includes: an irradiation chamber which is in a vacuum environment and in which an X-ray source configured to emit X-rays is to be arranged; and a sample chamber which is in an atmospheric pressure environment and in which a sample cell is to be arranged, the X-ray fluorescence spectrometer including: a window frame holding member, which forms a part of a partition wall between the irradiation chamber and the sample chamber, and includes an opening for allowing the X-rays to pass therethrough from the irradiation chamber to the sample chamber; and a window frame member, which is configured to hold a partition film, and is to be arranged in the opening of the window frame holding member, the partition film being formed from a material that transmits the X-rays, and forming another part of the partition wall. The window frame holding member includes a film supporting member including a plurality of through holes for allowing the X-rays to pass therethrough, the film supporting member being arranged adjacent on the irradiation chamber side of the partition film, and being configured to support the partition film from the irradiation chamber side. The window frame member includes: an inner film holding member having an annular shape, the inner film holding member including a peripheral wall extending from a proximal end to be arranged on the sample chamber side toward a distal end to be arranged on the irradiation chamber side, the distal end having an opening to be closed by a part of the partition film; and an outer film holding member having an annular shape, the outer film holding member being configured to be inserted from the distal end of the inner film holding member to be mounted to the proximal end of the inner film holding member so as to fix a surrounding of the part of the partition film to the inner film holding member.
(2) The inner film holding member includes, at the proximal end, a flange portion configured to fix a positional relationship with the window frame holding member.
(3) In the X-ray fluorescence spectrometer according to another aspect of the present disclosure, the flange portion includes: a first flange portion, which is provided on the distal end side, and is configured to sandwich the partition film together with the outer film holding member; and a second flange portion, which is provided on the proximal end side, has an outer diameter larger than an outer diameter of the first flange portion, and is configured to be fixed to the window frame holding member.
(4) In the X-ray fluorescence spectrometer according to another aspect of the present disclosure, the first flange portion and the second flange portion are integrally formed.
(5) In the X-ray fluorescence spectrometer according to another aspect of the present disclosure, the peripheral wall includes a perpendicular portion extending perpendicularly from the flange portion toward the distal end, and a curved portion curved from the perpendicular portion to the distal end.
(6) In the X-ray fluorescence spectrometer according to another aspect of the present disclosure, the peripheral wall includes a perpendicular portion extending perpendicularly from the flange portion toward the distal end, and an inclined portion inclined from the perpendicular portion to the distal end.
(7) In the X-ray fluorescence spectrometer according to another aspect of the present disclosure, the peripheral wall includes, at the distal end, a flat portion parallel to a plane including the opening to be closed by the part of the partition film.
(8) In the X-ray fluorescence spectrometer according to another aspect of the present disclosure, the outer film holding member and/or the film supporting member is formed from a resin.
(9) In the X-ray fluorescence spectrometer according to another aspect of the present disclosure, the inner film holding member and/or the window frame holding member is formed from a metal.
(10) In the X-ray fluorescence spectrometer according to another aspect of the present disclosure, the window frame holding member includes a first gas inflow hole which passes from an outer side surface to an inner side surface opposed to the window frame member, and the flange portion includes a second gas inflow hole which passes through an upper surface and a lower surface of the flange portion.
(11) In the X-ray fluorescence spectrometer according to another aspect of the present disclosure, the window frame holding member includes, on an outer side of the first gas inflow hole, a gas supply port for supplying gas to be caused to flow between the sample cell and the partition film via the first gas inflow hole and the second gas inflow hole.

### Advantageous Effects of Invention

According to the present disclosure, measurement can be performed even when spaces divided by the partition film have a pressure difference therebetween, and the partition film can be easily extended without causing warping and wrinkles.

### Brief Description of Drawings

FIG. 1 is a view illustrating an outline of an X-ray fluorescence spectrometer.
FIG. 2 is a bird's-eye view of a sample base.
FIG. 3 is a bird's-eye view of the sample base.
FIG. 4 is a top view, a side view, and a bottom view of a window frame holding member.
FIG. 5 is a top view, a side view, and a bottom view of a film supporting member.
FIG. 6 is a top view, a side view, and a bottom view of an inner film holding member.
FIG. 7 is a top view, a side view, and a bottom view of an outer film holding member.
FIG. 8 is a view illustrating a cross section of the sample base.
FIG. 9 is a view illustrating a state of mounting a partition film to a window frame member.
FIG. 10 is a view illustrating a cross section of a window frame member in a modification example.

### Description of Embodiments

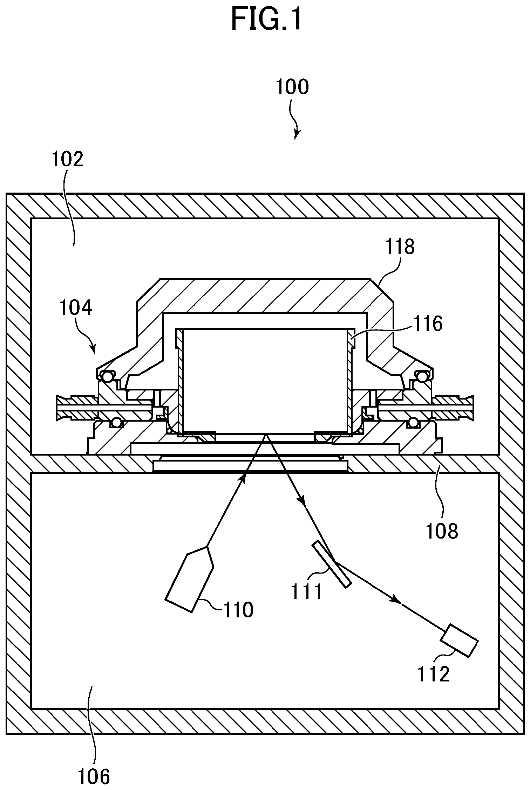

Now, a preferred embodiment for carrying out the present invention (hereinafter referred to as "embodiment") will be described with reference to the drawings. FIG. 1 is a view for illustrating an outline of an X-ray fluorescence spectrometer 100. As illustrated in FIG. 1, the X-ray fluorescence spectrometer 100 includes: a sample chamber 102 which is in a vacuum environment; and an irradiation chamber 106 which is in an atmospheric pressure environment. The sample chamber 102 and the irradiation chamber 106 are divided by the partition wall including a division wall 108, so as to prevent a gas from moving therebetween. The division wall 108 has an opening formed to allow X-rays to pass therethrough from the irradiation chamber 106 to the sample chamber 102.

In the irradiation chamber 106, an X-ray source 110 for emitting X-rays, a spectroscopic device 111 for dispersing fluorescent X-rays, a detector 112 for detecting the fluorescent X-rays, and the like, are arranged. The X-ray source 110 irradiates a sample cell 116 with X-rays through the above-mentioned opening. The sample irradiated with the X-rays emits fluorescent X-rays. The spectroscopic device 111 disperses the fluorescent X-rays having a predetermined wavelength emitted from the sample. The detector 112 is arranged at a position at which the fluorescent X-rays dispersed by the spectroscopic device 111 enter the detector 112. The detector 112 is, for example, a proportional counter. The detector 112 measures the fluorescent X-rays to output a pulse signal. The intensity of the fluorescent X-rays is acquired by a counter (not shown) counting the pulse signal output from the detector 112. The analysis of the sample is performed based on the intensity of the fluorescent X-rays.

The spectroscopic device 111 and the detector 112 may be provided for each element to be analyzed, or the spectroscopic device 111 and the detector 112 that form a pair may be configured to rotate and move. When the spectroscopic device 111 and the detector 112 that form a pair are rotated and moved, a mechanism (goniometer) for rotating and moving the spectroscopic device 111 and the detector 112 is arranged in the irradiation chamber 106. The present disclosure is particularly effective for the case of analyzing light elements in a wavelength-dispersive X-ray fluorescence spectrometer 100 having a long distance from the sample to the detector 112, as illustrated in FIG. 1, but the X-ray fluorescence spectrometer 100 may be an energy-dispersive spectrometer including no spectroscopic device 111.

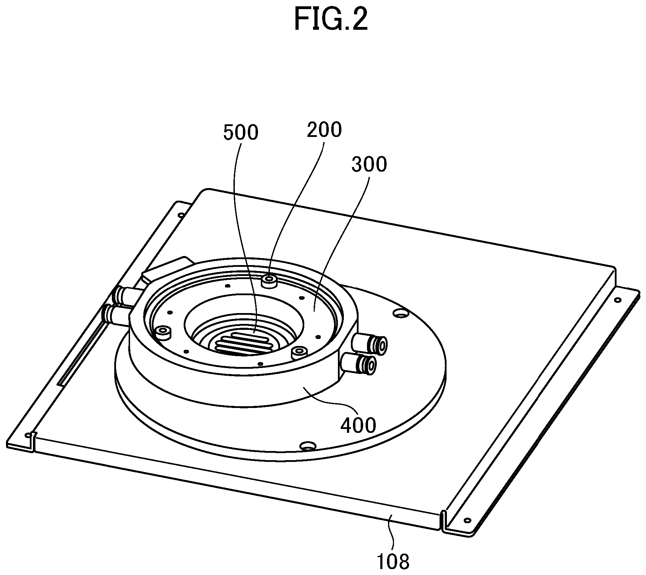

A sample base 104 is provided in the sample chamber 102, and the sample cell 116 is arranged in the sample base 104. The inside of the sample chamber 102 may be filled with helium, or may be filled with air. According to the present disclosure, the measurement can be performed even when the sample is in a helium environment or in an air environment. In the following, description is given of a case in which the sample is placed in an air environment, which is a case in which measurement can be performed at low cost and without the need of helium gas procurement. Further, the sample may be liquid or solid (including powder), but a case in which the sample is liquid is described in the following. The liquid sample is arranged in the sample cell 116. The sample cell 116 has a cylindrical shape, and has a sample holding film attached thereto so as to close a bottom surface. The liquid sample is arranged on the sample holding film. Further, another film is provided on an upper surface of the sample cell 116 so as to hermetically seal the sample cell 116 to prevent the sample from spilling. The sample base 104 includes a window frame member 300, a window frame holding member 400, and a lid member 118. A specific configuration of the sample base 104 will be described with reference to FIG. 2 to FIG. 8.

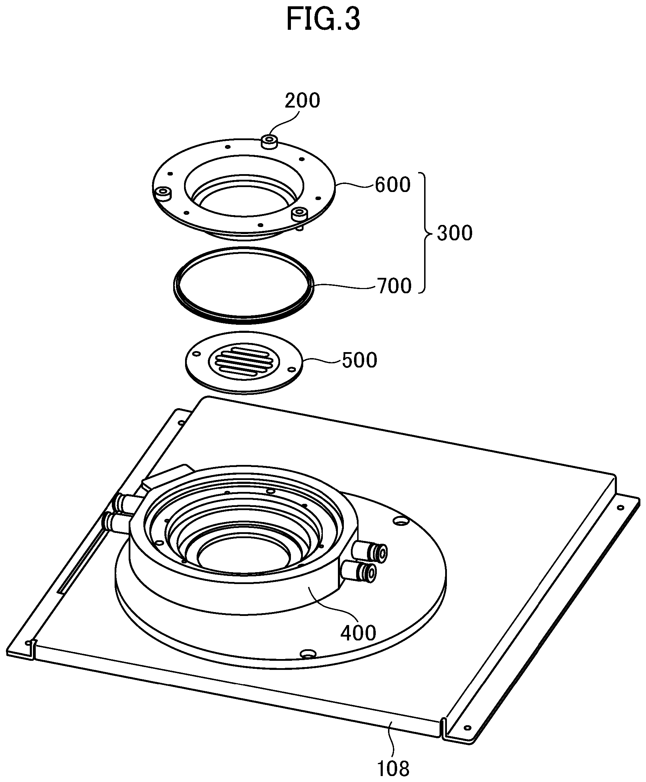

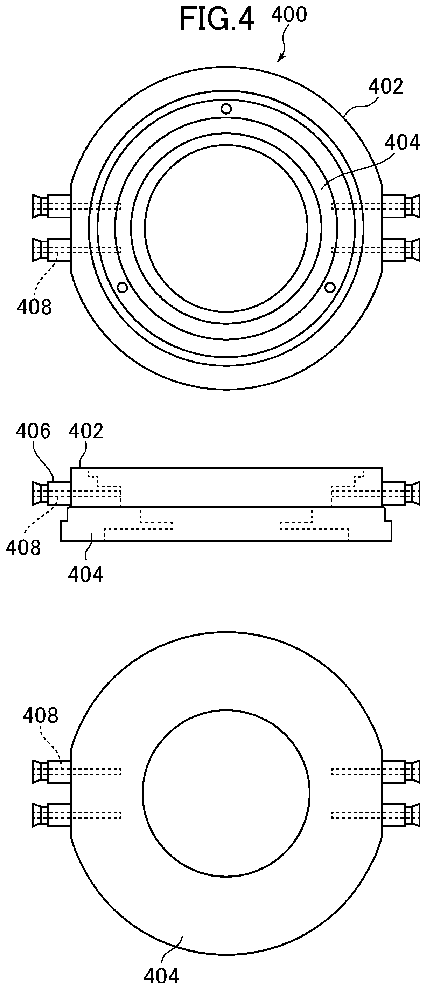

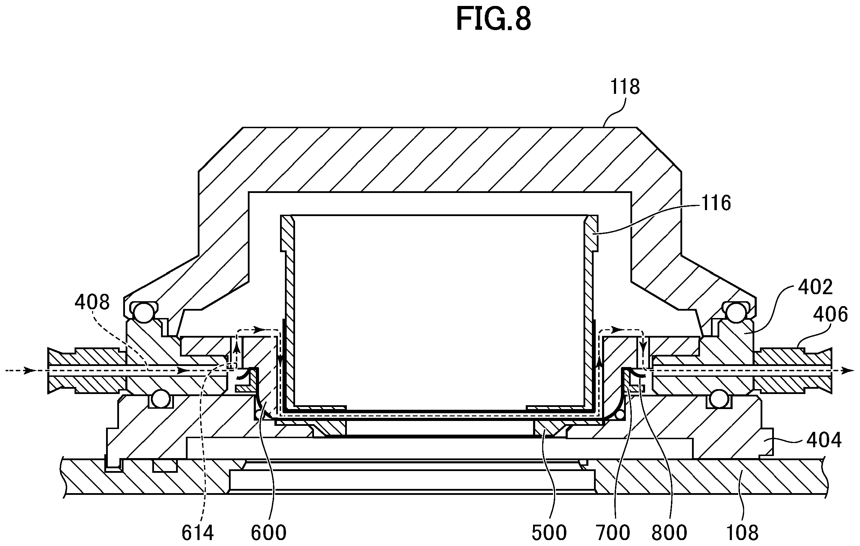

FIG. 2 and FIG. 3 are bird's-eye views of the sample base 104 (excluding the lid member 118) and the division wall 108 between the sample chamber 102 and the irradiation chamber 106. FIG. 2 shows a state in which the window frame holding member 400 and the window frame member 300 are arranged on the division wall 108, and FIG. 3 shows a state in which the window frame member 300 and a film supporting member 500 are removed. FIG. 4 to FIG. 7 show top views (upper side), side views (middle), and bottom views (lower side) of the respective members. FIG. 8 is a view for illustrating cross sections of the sample base 104 and the division wall 108 in a state in which the sample cell 116 is arranged.

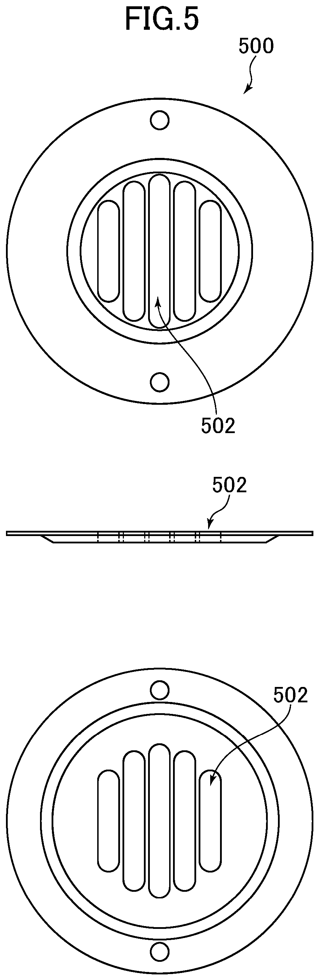

The window frame holding member 400 forms a part of the partition wall between the irradiation chamber 106 and the sample chamber 102, and includes an opening for allowing X-rays to pass therethrough from the irradiation chamber 106 to the sample chamber 102. Specifically, the window frame holding member 400 forms, together with the division wall 108, a part of the partition wall for dividing the sample chamber 102 and the irradiation chamber 106. The window frame holding member 400 includes an upper holding portion 402 and a lower holding portion 404 illustrated in FIG. 4, and the film supporting member 500 illustrated in FIG. 5. The upper holding portion 402 and the lower holding portion 404 each include an opening for allowing X-rays to pass therethrough from the irradiation chamber 106 to the sample chamber 102. When the opening of the division wall 108 is closed only by the film supporting member 500 and a partition film 800, the window frame holding member 400 is not always required to form a part of the partition wall.

The lower holding portion 404 is a member to be arranged in contact on the division wall 108. The lower holding portion 404 has an outer edge formed into a substantially circular shape in top view and bottom view, and includes a circular opening at a position corresponding to the opening formed in the division wall 108. The lower holding portion 404 is formed so that, in sectional view, an outer periphery is the thickest and an inner side is thin. For example, the lower holding portion 404 includes a step (first step) at a position of an outer edge of the window frame member 300 (position corresponding to a peripheral wall 606 of an inner film holding member 600 to be described later) when the window frame member 300 is arranged. The lower holding portion 404 includes an O-ring to be in contact with a curved portion 610 of the inner film holding member 600, at the position at which the step is provided. In this manner, the irradiation chamber 106 can be kept in vacuum in a state in which the sample chamber 102 is subjected to air or gas replacement (for example, a state in which the sample chamber 102 is filled with helium gas). Moreover, the lower holding portion 404 includes a step (second step) on the inner side of the step (first step). In a state in which the film supporting member 500 is arranged, the outer edge of the film supporting member 500 is positioned at the position of the step (second step).

The upper holding portion 402 is a member to be arranged in contact on the lower holding portion 404. The upper holding portion 402 has an outer edge formed into a substantially circular shape in top view and bottom view, and includes a circular opening having the same center position as that of the opening formed in the lower holding portion 404, and a diameter larger than that of the opening formed in the lower holding portion 404. The upper holding portion 402 includes an O-ring at a position to be in contact with the lower holding portion 404.

Further, the upper holding portion 402 includes a first gas inflow hole 408 that passes from an outer side surface to an inner side surface opposed to the window frame member 300. The upper holding portion 402 includes a gas supply port 406 for suppling gas to be caused to flow between the sample cell 116 and the partition film 800 via the first gas inflow hole 408 and a second gas inflow hole 614 (described later). A hose or the like that becomes a flow path of gas is mounted to the gas supply port 406 so that gas suppled from an external gas supply apparatus flows from the outer side surface to the inner side surface.

The upper holding portion 402 and the lower holding portion 404 are desired to be formed from a metal. A metal material is less liable to be deteriorated by X-rays compared to a resin material, and hence can be repeatedly used. Further, the upper holding portion 402 and the lower holding portion 404 may be integrally formed.

The film supporting member 500 includes a plurality of through holes 502 for allowing X-rays to pass therethrough, and is arranged adjacent to the partition film 800 on the irradiation chamber 106 side of the partition film 800 to support the partition film 800 from the irradiation chamber 106 side. Specifically, as illustrated in FIG. 5, the film supporting member 500 has an outer edge having a substantially circular shape in top view and bottom view. The film supporting member 500 is formed so that the vicinity of the outer periphery is thin and the inner side is thicker than the vicinity of the outer periphery. A part formed thick in the film supporting member 500 has a shape corresponding to the shape of the opening of the lower holding portion 404. The film supporting member 500 is arranged on the lower holding portion 404 so that the part formed thick is positioned at the opening of the lower holding portion 404. At this time, the outer edge of the film supporting member 500 is positioned at a place at which the step (second step) provided in the lower holding portion 404 is provided. The plurality of through holes 502 for allowing X-rays to pass therethrough are formed in the thick part of the film supporting member 500.

In this embodiment, the film supporting member 500 includes five through holes 502. Each of the through holes 502 has an elongated shape. The through holes 502 have the same thickness, but are formed to be longer the closer they are to the center. However, the shapes of the through holes 502 are not limited to the shapes illustrated in FIG. 5. For example, the plurality of through holes 502 may each have a hexagonal shape, and may be arranged side by side to form a honeycomb structure. Further, the film supporting member 500 is desired to be formed from a thermoplastic resin such as polyether ether ketone that is less deteriorated by X-rays. According to the present disclosure, the partition film 800 is supported by a part between the adjacent through holes 502. In this manner, the partition film 800 can be prevented from being damaged due to the difference in pressure between the sample chamber 102 and the irradiation chamber 106.

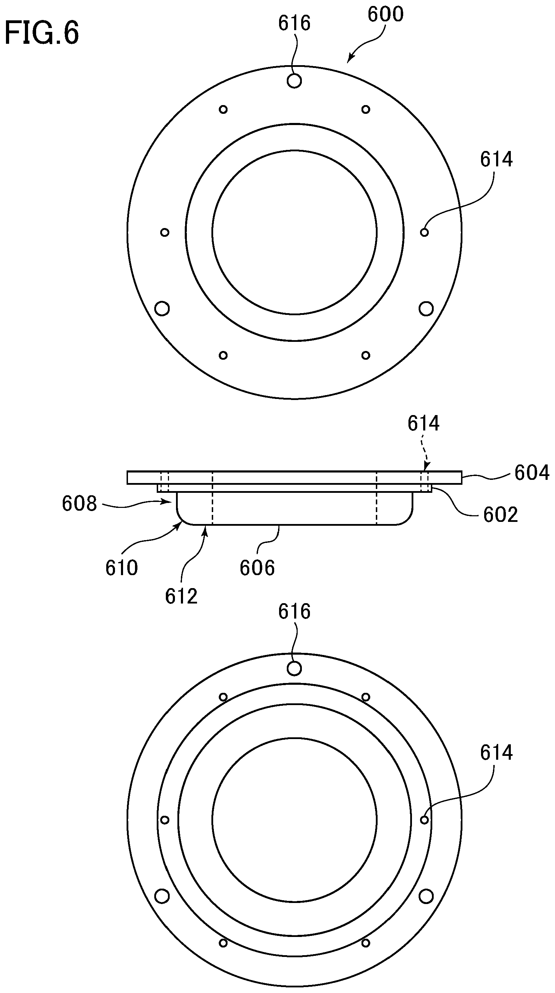

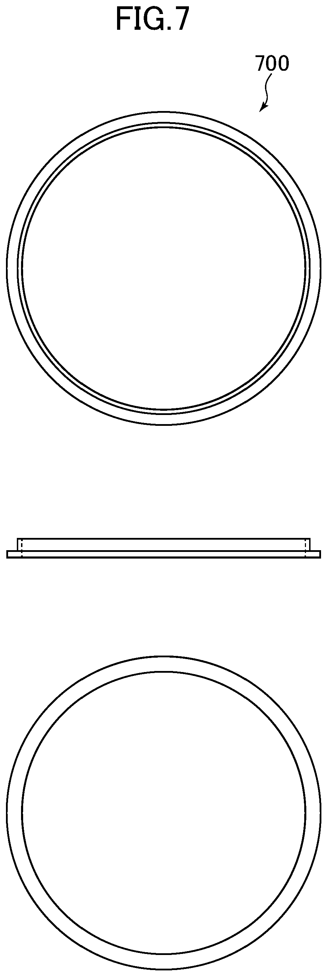

The window frame member 300 holds the partition film 800 which is formed from a material that transmits X-rays and forms a part of the partition wall, and is arranged within the opening of the window frame holding member 400. Specifically, the window frame member 300 includes the inner film holding member 600 illustrated in FIG. 6 and the outer film holding member 700 illustrated in FIG. 7. The window frame member 300 is arranged within the opening of the window frame holding member 400 in a state in which the partition film 800 is sandwiched between the inner film holding member 600 and the outer film holding member 700. The partition film 800 present in the opening forms a part of the partition wall.

The inner film holding member 600 has an annular shape, and includes: a flange portion at a proximal end to be arranged on the sample chamber 102 side; and the peripheral wall 606 that extends from the proximal end toward a distal end that is to be arranged on the irradiation chamber 106 side. Specifically, the flange portion is provided at the proximal end, and has an outer edge formed into a circular shape with a circular opening formed on the inner side. The flange portion includes a first flange portion 602 on the distal end side, and a second flange portion 604 on the proximal end side. The peripheral wall 606 extends from the first flange portion 602 toward the distal end, and the first flange portion 602 and the peripheral wall 606 sandwich the partition film 800 together with the outer film holding member 700.

The second flange portion 604 has an outer diameter that is larger than that of the first flange portion 602, and is fixed to the window frame holding member 400. The second flange portion 604 has screw holes 616 formed therein, and is fixed to the upper holding portion 402 by screws 200 inserted into the screw holes 616. The window frame member 300 is arranged in the window frame holding member 400 so that the outer edge of the peripheral wall 606 is positioned on the step (first step) of the lower holding portion 404. In this embodiment, the first flange portion 602 and the second flange portion 604 are integrally formed, but the first flange portion 602 and the second flange portion 604 may be formed to be separable. Further, the flange portion includes the second gas inflow hole 614 that passes through its upper surface on the proximal end side and its lower surface on the distal end side.

The peripheral wall 606 extends from the first flange portion 602 toward the distal end, and the distal end has an opening to be closed by a part of the partition film 800. Specifically, the peripheral wall 606 includes: a perpendicular portion 608 extending perpendicularly from the flange portion toward the distal end; the curved portion 610 curved from the perpendicular portion 608 toward the inner side of the distal end; and a flat portion 612 parallel to a plane including the opening at the distal end. The peripheral wall 606 and the first flange portion 602 are integrally formed from a metal. The peripheral wall 606 may be configured to include the perpendicular portion 608 and the curved portion 610, and include no flat portion 612.

The outer film holding member 700 is an annular member, and holds the partition film 800 together with the inner film holding member 600. Specifically, the outer film holding member 700 is an annular member to be inserted from the distal end of the inner film holding member 600. The inner diameter of the outer film holding member 700 has a size corresponding to the outer diameter of the peripheral wall 606. When the outer film holding member 700 is mounted to the proximal end of the inner film holding member 600, the outer film holding member 700 fixes the surrounding of a part of the partition film 800 (part that closes the opening of the peripheral wall 606) to the inner film holding member 600. In FIG. 7 and FIG. 8, the outer diameter of the outer film holding member 700 on the proximal end side is smaller than the outer diameter thereof on the distal end side, but the outer film holding member 700 can be freely selected as long as the outer film holding member 700 is shaped to be capable of holding the partition film 800 together with the inner film holding member 600. Further, the outer film holding member 700 is desired to be formed from a thermoplastic resin such as polyether ether ketone that is less deteriorated by X-rays, so as to be easily mountable to the peripheral wall 606.

The lid member 118 hermetically seals a space in which the sample cell 116 is arranged. Specifically, as illustrated in FIG. 8, the lid member 118 has a shape that covers the space in which the sample cell 116 is arranged, and is arranged in contact with the upper holding portion 402 of the window frame holding member 400. The lid member 118 includes an O-ring at a position to be in contact with the upper holding portion 402, and divides the inner side and the outer side of the lid member 118 so as to prevent gas from moving therebetween, excluding paths of the first gas inflow hole 408 and the second gas inflow hole 614.

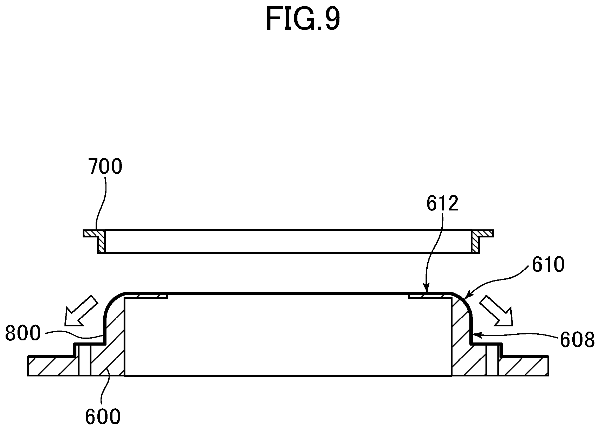

According to the present disclosure, the partition film 800 that is required to be regularly replaced can be easily mounted to the window frame member 300 without causing warping and wrinkles. FIG. 9 is a view illustrating a state of mounting the partition film 800 to the window frame member 300. First, the inner film holding member 600 is placed at a flat place with the proximal end facing downward (with the distal end facing upward). The partition film 800 that is sufficiently larger than the opening is arranged so as to cover the opening at the distal end. In this state, the outer film holding member 700 is fitted from the distal end toward the proximal end of the peripheral wall 606. At this time, a pulling force acts on the partition film 800 in directions of arrows of FIG. 9. Accordingly, the partition film 800 can be easily extended without causing warping and wrinkles. Further, the peripheral wall 606 includes the curved portion 610 and the flat portion 612, and hence a force to be applied to the partition film 800 in an extended state can be dispersed. Thus, a force is not applied to one portion of the partition film 800, and hence the possibility of damage at the time of sandwiching the partition film 800 can be reduced.

Further, according to the present disclosure, the replacement of the sample and the gas replacement of the sample chamber 102 can be performed while the irradiation chamber 106 is kept in vacuum. Specifically, the lower holding portion 404 includes the O-ring at a position at which the step (first step) is provided. The O-ring comes into contact with both of the curved portion 610 of the inner film holding member 600 and the lower holding portion 404 when the window frame member 300 is arranged on the lower holding portion 404. In this manner, the window frame member 300 and the window frame holding member 400 can be airtightly sealed. Further, the opening of the window frame holding member 400 is closed by the partition film 800 held by the window frame member 300. Accordingly, the sample chamber 102 and the irradiation chamber 106 are isolated from each other even in a state in which the sample cell 116 is removed (see FIG. 2). Thus, the replacement of the sample and the gas replacement of the sample chamber 102 can be performed while the irradiation chamber 106 is kept in vacuum. Further, the sample can be easily replaced by, without using a tool or the like, only opening the lid member 118 and then reloading the sample cell 116.

Further, the film supporting member 500 is desired to be replaced at regular periods although the film supporting member 500 is formed from a material that is less deteriorated by X-rays. According to the present disclosure, the film supporting member 500 is arranged on the window frame holding member 400, and is not fixed with screws or the like. Accordingly, the film supporting member 500 can be easily replaced by only arranging, at the opening of the window frame holding member 400, the window frame member 300 having the partition film 800 mounted thereon as described above. Further, according to the present disclosure, the screw holes 616 are formed in the second flange portion 604, and the window frame member 300 is fixed to the upper holding portion 402 by the screws 200 inserted into the screw holes 616. The screwing operation can be performed from the upper side that allows easy operation, and hence a user can easily fix the window frame member 300 to the upper holding portion 402.

Further, according to the present disclosure, deterioration due to ozone that is generated by the partition film 800 at the time of measurement can be prevented. Specifically, as illustrated in FIG. 1 and FIG. 8, the sample holding film for closing the bottom surface of the sample cell 116 and the partition film 800 are arranged close to each other, but have a gap therebetween. Accordingly, when the sample chamber 102 has air, air is present between the sample holding film and the partition film 800. Further, as illustrated in FIG. 1, at the time of measurement, X-rays are applied to the partition film 800. The air includes oxygen, and hence ozone is generated when the oxygen is exposed to the X-rays, resulting in the ozone promoting the deterioration of the partition film 800. In the present disclosure, gas is supplied to the gas supply port 406 from the external gas supplying apparatus. The gas to be supplied is preferably nitrogen, but may be air. Broken-line arrows of FIG. 8 indicate a path in which the supplied gas flows. The gas supplied from the gas supply port 406 reaches a space (space in the vicinity of the outer film holding member 700 of FIG. 8) between the window frame member 300 and the window frame holding member 400 via the first gas inflow hole 408. This space is annularly present along the outer film holding member 700. Further, the space is connected to the second gas inflow hole 614, and hence the supplied gas reaches a space between the sample cell 116 and the lid member 118 via the second gas inflow hole 614. Moreover, some of the supplied gas passes between the sample cell 116 and the inner film holding member 600 to reach a gap between the sample holding film and the partition film 800. The space between the sample cell 116 and the inner film holding member 600 and the space between the sample holding film and the partition film 800 are actually very small, but are illustrated in FIG. 8 in an exaggerated manner for easy understanding. When ozone is generated between the sample holding film and the partition film 800, the ozone is discharged together with the supplied gas to the space between the sample cell 116 and the lid member 118. Then, the ozone is discharged from the gas supply port 406 on a side opposite to the gas supply port 406 to which the gas has been supplied from the gas supplying apparatus. As described above, with the gas being supplied from the gas supply port 406, ozone does not stagnate between the sample holding film and the partition film 800, and hence the partition film 800 can be prevented from being deteriorated by the ozone generated at the time of measurement.

The present invention can be variously modified without being limited to the above-mentioned embodiment. The configuration of the X-ray fluorescence spectrometer 100 described above is described as one example, and the present invention is not limited thereto. The configuration described in the above-mentioned embodiment may be replaced by a configuration that is substantially the same as the configuration described in the above-mentioned embodiment, a configuration that exhibits the same action and effect as those of the configuration described in the above-mentioned embodiment, or a configuration that achieves the same object as that of the configuration described in the above-mentioned embodiment. For example, description has been given of a case in which the outer edge of each of the window frame member 300 and the window frame holding member 400 has a circular shape, but the outer edge may have a polygonal shape or other shapes.

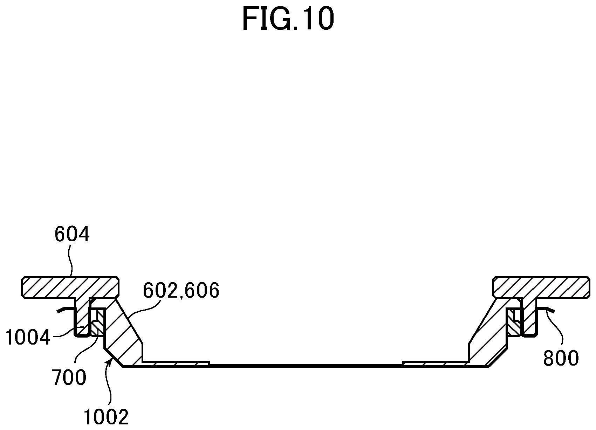

Further, FIG. 10 is a view illustrating the cross section of the window frame member 300 in a modification example. In the inner film holding member 600 in the modification example, the first flange portion 602 and the peripheral wall 606 are integrally formed, but the first flange portion 602 and the second flange portion 604 are separable. Further, in this modification example, the peripheral wall 606 includes, in place of the curved portion 610, an inclined portion 1002 inclined toward the inner side from the perpendicular portion 608 to the distal end. Even with such a shape, the partition film 800 can be easily mounted to the window frame member 300. Similarly to the foregoing, the flat portion 612 may also be omitted in the modification example.

Further, the second flange portion 604 includes a second peripheral wall 1004 extending perpendicularly toward the distal end. As illustrated in FIG. 10, the partition film 800 is sandwiched not only between the outer film holding member 700 and the first flange portion 602, but also between the second peripheral wall 1004 and the outer film holding member 700. That is, in sectional view, the partition film 800 is bent two times when being fixed. Thus, in the modification example, the partition film 800 can be fixed more firmly.

### Reference Signs List

100 X-ray fluorescence spectrometer, 102 sample chamber, 104 sample base, 106 irradiation chamber, 108 division wall, 110 X-ray source, 111 spectroscopic device, 112 detector, 116 sample cell, 118 lid member, 200 screw, 300 window frame member, 400 window frame holding member, 402 upper holding portion, 404 lower holding portion, 406 gas supply port, 408 first gas inflow hole, 500 film supporting member, 502 through hole, 600 inner film holding member, 602 first flange portion, 604 second flange portion, 606 peripheral wall, 608 perpendicular portion, 610 curved portion, 612 flat portion, 614 second gas inflow hole, 616 screw hole, 700 outer film holding member, 800 partition film, 1002 inclined portion, 1004 second peripheral wall

## Claims

1. An X-ray fluorescence spectrometer, which includes: an irradiation chamber which is in a vacuum environment and in which an X-ray source configured to emit X-rays is to be arranged; and a sample chamber which is in an atmospheric pressure environment and in which a sample cell is to be arranged, the X-ray fluorescence spectrometer comprising:
a window frame holding member, which forms a part of a partition wall between the irradiation chamber and the sample chamber, and includes an opening for allowing the X-rays to pass therethrough from the irradiation chamber to the sample chamber; and
a window frame member, which is configured to hold a partition film, and is to be arranged in the opening of the window frame holding member, the partition film being formed from a material that transmits the X-rays, and forming another part of the partition wall,
wherein the window frame holding member includes a film supporting member including a plurality of through holes for allowing the X-rays to pass therethrough, the film supporting member being arranged adjacent to the partition film on the irradiation chamber side of the partition film, and being configured to support the partition film from the irradiation chamber side, and
wherein the window frame member includes:
an inner film holding member having an annular shape, the inner film holding member including a peripheral wall extending from a proximal end to be arranged on the sample chamber side toward a distal end to be arranged on the irradiation chamber side, the distal end having an opening to be closed by a part of the partition film; and
an outer film holding member having an annular shape, the outer film holding member being configured to be inserted from the distal end of the inner film holding member to be mounted to the proximal end of the inner film holding member so as to fix a surrounding of the part of the partition film to the inner film holding member.

2. The X-ray fluorescence spectrometer according to claim 1, wherein the inner film holding member includes, at the proximal end, a flange portion configured to fix a positional relationship with the window frame holding member.

3. The X-ray fluorescence spectrometer according to claim 2, wherein the flange portion includes:
a first flange portion, which is provided on the distal end side, and is configured to sandwich the partition film together with the outer film holding member; and
a second flange portion, which is provided on the proximal end side, has an outer diameter larger than an outer diameter of the first flange portion, and is configured to be fixed to the window frame holding member.

4. The X-ray fluorescence spectrometer according to claim 3, wherein the first flange portion and the second flange portion are integrally formed.

5. The X-ray fluorescence spectrometer according to claim 2, wherein the peripheral wall includes a perpendicular portion extending perpendicularly from the flange portion toward the distal end, and a curved portion curved from the perpendicular portion to the distal end.

6. The X-ray fluorescence spectrometer according to claim 2, wherein the peripheral wall includes a perpendicular portion extending perpendicularly from the flange portion toward the distal end, and an inclined portion inclined from the perpendicular portion to the distal end.

7. The X-ray fluorescence spectrometer according to claim 1, wherein the peripheral wall includes, at the distal end, a flat portion parallel to a plane including the opening to be closed by the part of the partition film.

8. The X-ray fluorescence spectrometer according to claim 1, wherein the outer film holding member and/or the film supporting member is formed from a resin.

9. The X-ray fluorescence spectrometer according to claim 1, wherein the inner film holding member and/or the window frame holding member is formed from a metal.

10. The X-ray fluorescence spectrometer according to claim 2,
wherein the window frame holding member includes a first gas inflow hole which passes from an outer side surface to an inner side surface opposed to the window frame member, and
wherein the flange portion includes a second gas inflow hole which passes through an upper surface and a lower surface of the flange portion.

11. The X-ray fluorescence spectrometer according to claim 10, wherein the window frame holding member includes, on an outer side of the first gas inflow hole, a gas supply port for supplying gas to be caused to flow between the sample cell and the partition film via the first gas inflow hole and the second gas inflow hole.
